# EUROPEAN PATENT SPECIFICATION

(11) **EP 1 147 704 B1**
(45) Date of publication and mention of the grant of the patent: **25.05.2005**
(21) Application number: 01302290.0
(22) Date of filing: 13.03.2001
(51) Int. Cl.: A01K 97/12

(54) **A fish-bite detector**
Bissanzeiger zum Angeln
Indicateur de touche pour la pêche

(30) Priority: 13.03.2000 GB 0005921
(43) Date of publication of application: 24.10.2001
(73) Proprietor: Fox Design International Limited, Chelmsford, Essex CM3 8HQ (GB)
(72) Inventor: Fox, Clifford Royston, Chelmsford, Essex CM3 8HQ (GB); Simpson, Nigel, Ventnor, Isle of Wight PO38 3BZ (GB)
(74) Representative: Crouch, David John

(56) References cited:
- EP-A- 0 570 117
- EP-A- 0 850 562
- GB-A- 2 324 696

## Description

The present invention relates to a fish-bite detector having coupling means which are coupled to a fishing line when the detector is in use, pulse generator means coupled to the coupling means to generate a pulse every time the coupling means indicates that the line has moved longitudinally through a given distance, a counter connected to the pulse generating means to provide a count of the number of pulses it receives, and an alarm output of the counter which provides an alarm signal when the count in the counter reaches a given count, whereupon it is reset.

Such a construction of fish-bite detector is described in our EP 0,570,117. In this prior detector, the count in the counter is incremented every time a pulse is issued following movement of the line in a given direction. Whilst the nature of the alarm signal is different depending on the direction of movement of the fishing line, the count accumulates independently of that direction of movement. As a result, in turbulent conditions in which the line may alternately be drawn out and retracted by the undertow, such movement, whilst not indicating any genuine bite from a fish, may nonetheless trigger an alarm signal.

The present invention seeks to obviate this disadvantage.

Accordingly, the present invention is directed to a fish-bite detector having the construction set out in the opening paragraph of the present specification, in which the detector is provided with direction indicating means which serve to indicate the direction of longitudinal movement of the fishing line and in which the detector is such that a change in the longitudinal direction of movement of the fishing line, as indicated by the direction indicating means, causes the count in the counter to be interrupted. This may be achieved by rendering the count in the counter unchanged, reduced or reset by a pulse it receives in such an event.

The direction indicating means may comprise two devices triggered by movement of the coupling means one immediately after the other.

For example, the direction indicating means may comprise two reed switches displaced from one another so that an adjacent rotary magnet coupled to the coupling means will, by its rotation, trigger one of the reed switches immediately before the other.

With such direction indicating means, the direction of movement of the fishing line may be determined by the condition of one of the devices at the time the other is triggered.

When such a change in the longitudinal direction of movement of the fishing line is indicated by the direction indicating means, the count in the counter may be decremented. Instead, it may be reset, for example it may be reset to zero or the count may be increased for each pulse generated whilst the line moves in a longitudinal direction, and reduced for each pulse generated whilst the line moves in the opposite longitudinal direction, or the count may simply remain unchanged by a pulse upon a change in line movement direction.

Sensitivity adjustment means may be connected to the counter to alter the said given number, thereby to alter the sensitivity of the detector.

An example of a fish-bite detector made in accordance with the present invention will now be described with reference to the accompanying drawings, in which:
- Figure 1: shows a front elevational view of the detector;
- Figure 1a: shows a cross-sectional view of an adjustment knob of the detector shown in Figure 1;
- Figure 2: shows an interior of a first half of the detector shown in Figure 1;
- Figure 2a: shows a cross-sectional view through a portion of a printed circuit board close to an upper edge thereof of the detector shown in Figures 1 and 2;
- Figure 3: shows a circuit diagram of the detector shown in Figures 1 and 2;
- Figure 4: shows a flow chart of the operation of a micro controller shown in the circuitry of Figure 3; and
- Figure 5: shows an equivalent circuit to the micro controller shown in Figure 3, programmed according to Figure 4.

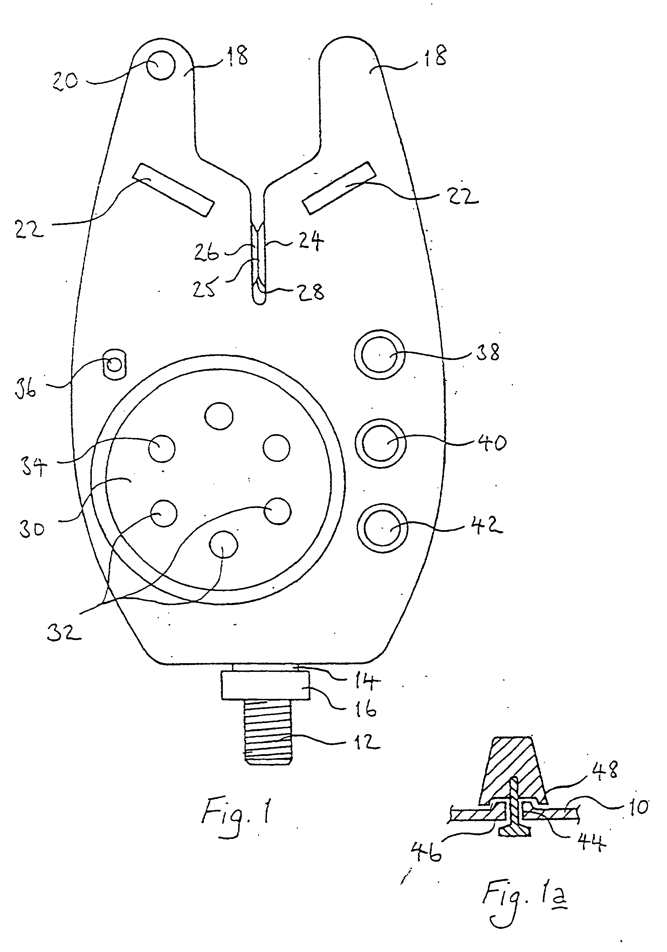

The fish-bite indicator shown in Figure 1 comprises a two-part synthetic plastics injection moulded housing 10 having an external screw-threaded metal shank 12 extending downwardly from its underside. A seal is formed between the housing 10 and the shank 12 by means of an O-ring 14 and a tightening nut 16 which urges the O-ring 14 tightly against the housing 10 and inwardly against the shank 12.

The upper end of the housing 10 is bifurcated, so that it has two generally upwardly extending prongs 18, at the upper end of the left hand of which there is provided a light emitting diode LED 20.

Recesses 22 are provided at the base of each prong 18 to accommodate respective beta-lights (not shown).

A slot 24 extends downwardly from the base of the bifurcation to expose a central portion 25 of coupling means in the form of a rotary part 26 contained within the housing. This central part is formed with a waist 28, so that it has the form of a pulley-wheel, enabling the rotary part 26 to be coupled with a fishing line (not shown) when the detector is in use. A generally circular diaphragm cover 30 of the housing 10 is provided underneath the bifurcation, slightly off-set from the longitudinal bisecting plane thereof, and is provided with a plurality of apertures 32 to permit sound to travel more readily through the housing 10 from a generally circular electromagnetic buzzer diaphragm 34 positioned immediately inwardly of the diaphragm cover 30. Immediately above and slightly to the left of the diaphragm cover 30 there is an on-off/test switch 36 extending outwardly from the housing 10.

Three rotary knobs 38, 40 and 42 are provided as a linear array immediately to the right of the diaphragm cover 30, these knobs being, respectively, a volume control, pitch control and sensitivity control for the buzzer.

As shown in Figure 1a, the housing wall at each knob 38, 40 and 42 is provided with an aperture 44 through which extends a shaft 46 which is rigidly secured to the knob. The wall of the housing 10 is raised at the annulus immediately surrounding the aperture 44. The underside of the knob is provided with a skirt portion 48 which surrounds the raised annulus to form a seal between the knob and the surrounding wall.

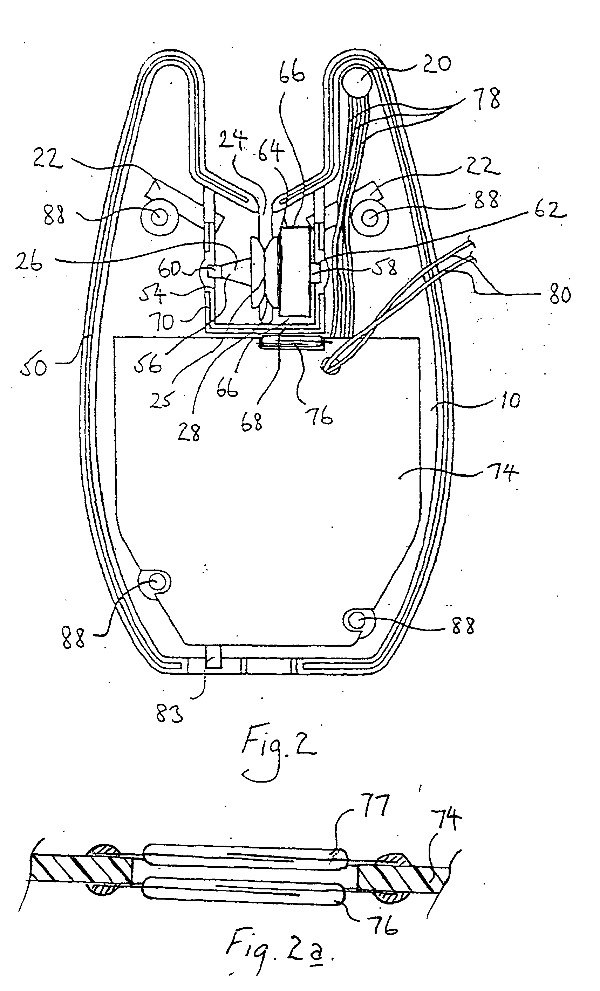

Figure 2 shows the interior of that half of the two-part housing 10 which is visible in Figure 1, with the other half of the housing 10 removed to reveal interior components of the fish-bite indicator. That edge of the housing half which faces the other half of the housing is formed with a longitudinally extending central rib 50. This engages a correspondingly formed longitudinally extending groove formed on the corresponding edge of the other housing part. An inner wall 54 is formed in the housing and generally surrounds the slot 24 to form half of an enclosure which contains the rotary part 26.

The rotary part has a tapering spindle portion 56 extending in an intended horizontal direction away from the central portion 25. A second spindle portion 58 of the rotary part 26 extends outwardly away from the central portion 25 in the opposite direction to that of the spindle portion 56. Respective recesses are formed in respective vertical parts of the inner wall 54 to provide rotary bearing means 60 and 62 respectively for the two spindle portions 56 and 58 of the rotary part 26.

A moulded ring magnet 64 is arranged with its axis of rotation in alignment with that of the rotary part 26, its outer cylindrical wall being adjacent to a bottom 68 of the inner wall 54.

The edges of the inner wall 54 which face the other half of the housing 10, are provided with formations 70 which interengage with corresponding formations formed on corresponding inner edges of the other half of the rotary part enclosure, to form a seal therewith.

The slot 24 in each half of the housing 10 extends to the upper face of the bottom 68 of the enclosure so that any water which finds its way into the enclosure can readily drain outwardly therefrom.

From the foregoing description, it will be appreciated that the housing, together with the inner wall 54, defines a sealed interior. The latter contains a printed circuit board 74 which is fixed to the interior of the housing 10 and which includes two reed switches 76 and 77 positioned one adjacent to the other, on the opposite sides of the circuit board from one another, spaced apart from one another in a direction tangential to the cylindrical outer surface of the ring magnet 64, and both arranged generally parallel to the axis of rotation thereof.

The reed switches 76 and 77 are mounted on the circuit board 74, within a cutaway region at the top edge of the board, immediately adjacent to the bottom 68 of the inner wall 54, within range of the magnetic field of the ring magnet 64 as successive portions of the outer cylindrical surface thereof passes by the bottom 68 when the rotary part 26 rotates.

The printed circuit board 74 is connected to the LED 2C via leads 78, and power leads 80 extend from the printed circuit board 74 to a 9 volt alkaline battery (not shown).

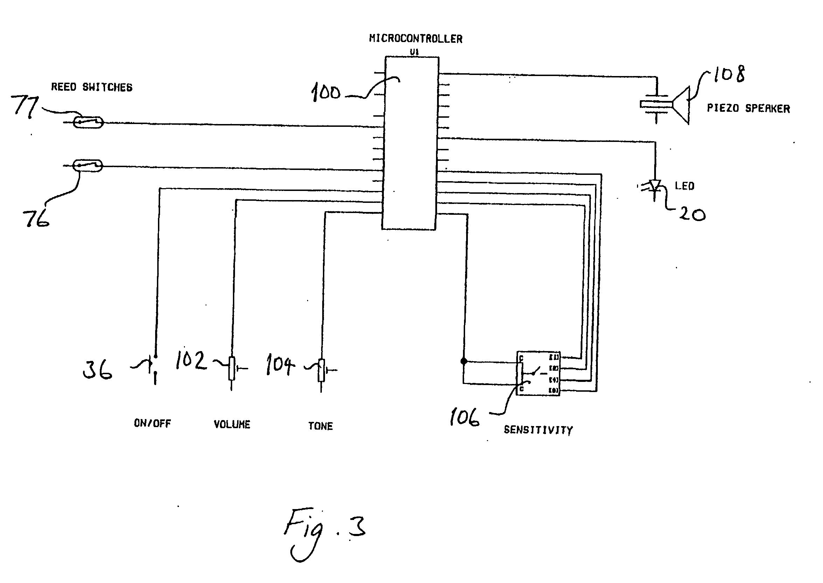

The on-off/test switch 36, the buzzer having the buzzer diaphragm 34, and each of the three control knobs 38, 40 and 42 shown in Figure 1 are all connected to the circuit board 74 to define circuitry shown in greater detail, and described hereinafter, with reference to Figure 3.

Internally screw-threaded horizontally extending portions 88 are formed in the interior of the housing part, and apertures formed in the other housing part in registration with the portions 88 when the two housing parts are brought together, enable screws (not shown) to secure those two housing parts tightly together with the rib 50 engaging the groove.

The manner in which the various parts of the indicator are connected together via the circuit board 74 is shown in Figure 3.

The reed switches 76 and 77 are connected to respective inputs of a micro controller 100. The on/off switch 36, the volume control 102, the tone control 104 and the sensitivity control 106 connected respectively to the knobs 38, 40 and 42 shown in Figure 1, are also connected to respective inputs of the micro controller 100. The sensitivity control 106 is connected to three further inputs of the micro controller 100 for respective different sensitivity settings. Finally, the LED 20 and an electromagnetic buzzer 108 (providing the diaphragm 34 shown in Figure 1) are connected to the respective outputs of the micro controller 100.

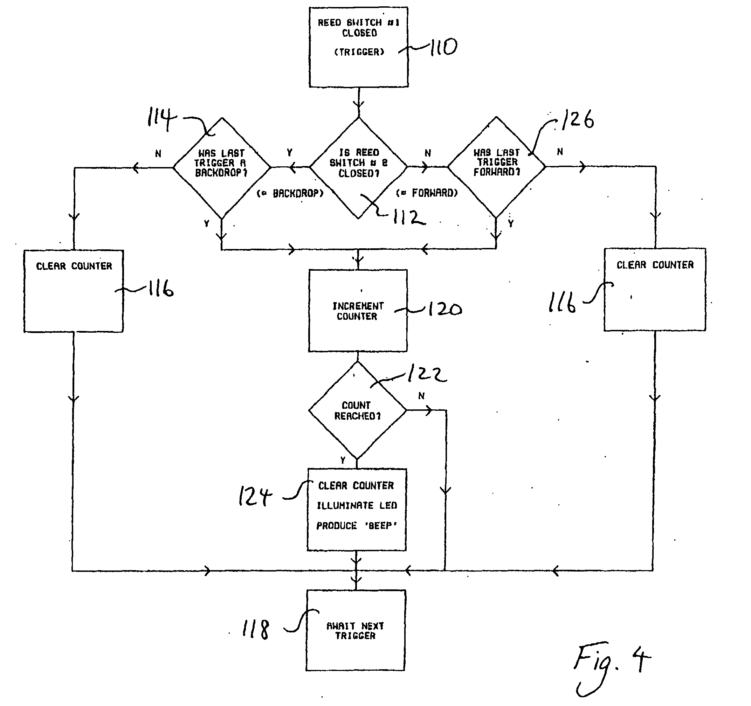

The micro controller 100 is programmed so as to execute the programme shown in Figure 4, as follows:

Upon receipt of a signal from the reed switch 76, when the latter is closed, at step 110, the micro controller 100 executes the interrogation step 112 to check whether the reed switch 77 is also closed. If the answer is yes, the micro controller 100 causes a check to be made as to whether the immediately preceding trigger was caused by a retraction of the fishing line, that is to say, a backdrop, at interrogation step 114. If the answer to that interrogation is no, then the micro controller 100 causes a counter within it to be cleared at step 116 and to prepare the micro controller 100 for the next trigger, at step 118.

If the answer at interrogation step 114 is yes, the micro controller 100 causes the counter to be incremented at step 120. The micro controller 100 then causes a check to be made as to whether the resulting count in the counter has reached a given count, at interrogation step 122. If the answer is no, the micro controller 100 causes itself to be ready for the next trigger at step 118. If the answer is yes, the micro controller 100 causes the counter to be cleared or reset, the LED 20 to be illuminated, and a beep to be produced by the beeper 108, at step 124.

If at interrogation step 112, the answer had been no, the micro controller 100 would cause a check to be made as to whether the last trigger was one caused by paying out of the fishing line, at interrogation step 126. If the answer to that question is yes, the micro controller continues its programme from step 120 where it increments the counter. If the answer is no, the counter is cleared at step 116, and the micro controller 100 is prepared to receive the next trigger at step 118.

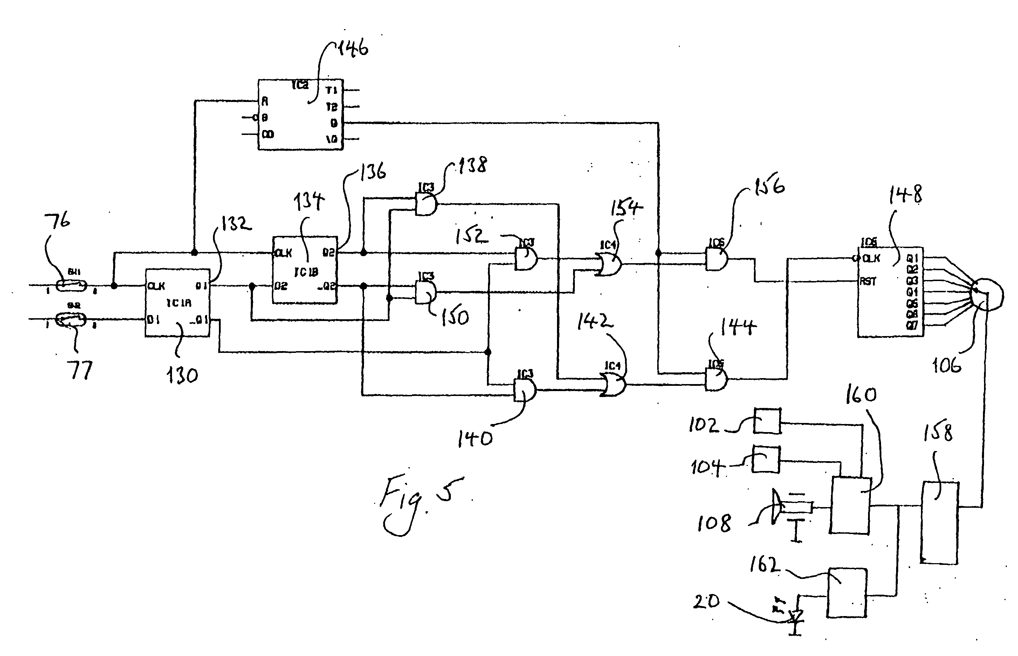

Figure 5 shows a circuit equivalent to the micro controller 100 when it is programmed as shown in Figure 4. Each of the devices shown in Figure 5 will have an equivalent device or combination of devices somewhere in the micro controller 100 (apart from the reed switches, the LED 20 and the buzzer 108).

The reed switches 76 and 77 are connected to the clock input and a further input respectively of a flip flop 130 such that the Q1 output 132 thereof is set to the value of the said further input each time a pulse is received by the clock input of the flip flop 130 from the reed switch 76. A further flip flop 134 also has its clock input connected to the output from the reed switch 76, but its further input is connected to the Q1 output 132 of the flip flop 130. This means that the Q2 output 136 of the flip flop 134 is set to the value of the Q1 output 132 upon receipt of a clocking pulse from the reed switch 76 by the clock input of the flip flop 134.

This means that Q1 represents the state of the reed switch 77 upon a given closure of the reed switch 76, and Q2 is representative of the state of the reed switch 77 at the time of the immediately preceding closure of the reed switch 76. An AND gate 138 is connected to receive the Q1 and Q2 values, and a further AND gate 140 is connected to receive the -Q1 and -Q2 values. The outputs from AND gates 138 and 140 are connected to respective inputs of an OR gate 142 which in turn has an output connected to one of the inputs of an AND gate 144. The other input of this AND gate 144 is connected to an output of a multi-vibrator 146, the input of which is triggered by the leading edge of a pulse from the reed switch 76.

The output of the AND gate 144 is connected to the clocking input of a counter 148.

A further AND gate 150 is connected to receive the Q1 and -Q2 values, and a further AND gate 152 is connected to receive the -Q1 and Q2 values. The outputs from the AND gates 150 and 152 are connected to respective inputs of an OR gate 154, the output of which is connected to one of the inputs of an AND gate 156. This has its other input connected to the output from the multi-vibrator 146 and its output is connected to a reset input of the counter 148.

The counter 148 has a series of outputs Q1 to Q7, the voltage levels of which are collectively indicative of a binary number representing the number of pulses received by the clocking input of the counter 148 since the last reset thereof. A multi-way switch constituting the sensitivity control 106 has respective inputs connected to the outputs from the counter 148, and an output connected to the input of a multi-vibrator 158. The output of the latter is connected to respective drivers 160 and 162 of the buzzer 108 and diode 20. The volume and pitch controls 102 and 104 are connected to the buzzer driver 160.

When the detector is installed for use, the fishing line of a fishing rod is passed over the rotary part 26 so that longitudinal movement of the line will rotate that part.

In the event that a fish bite causes the fishing line to be paid out, successive movements of the poles of the ring magnet 64 over the reed switches 76 and 77 cause closure of the reed switch 76 to precede closure of the reed switch 77 each time a pole of the ring magnet 64 passes over them.

With reference to the circuit shown in Figure 5, when the reed switch 76 is triggered, if at that instant the reed switch 77 is not closed, that is indicative of paying out of the fishing line. On the other hand, if upon closure of the reed switch 76, the reed switch 77 is already closed, that is indicative of a drop-back or retraction of the fishing line. The levels of Q1 and Q2 are therefore indicative of whether the current and immediately preceding triggering of the reed relays 76 and 77 indicate a paying out or a drop-back of the line. If they are the same therefore, this indicates that there is no change in the direction of movement of the fishing line, but if they are different, this indicates that the direction of movement of the fishing line has changed. Therefore, an output from either the AND gate 138 or the AND gate 140 is indicative of a pulse with line movement in the same direction as created the immediately preceding pulse. Therefore, an output from the OR gate 142 clocked by the multi-vibrator 146 is fed to the clocking input of the counter 148, and increments the latter, being indicative of movement in the same direction as for the last triggering pulse.

Conversely, if a triggering pulse is received by the flip flops 130 and 134 caused by movement of the line in a direction opposite to that which caused the immediately preceding triggering pulse, either AND gate 150 or AND gate 152 will pass a pulse to the OR gate 154, the output from which will be forwarded to the reset input of the counter 148 via the AND gate 156. When the count in the counter 148 has reached the value as selected by the multi-way switch 106, the multi-vibrator 158 is triggered causing the buzzer 108 and the diode 20 to be energised via the drivers 160 and 162 respectively.

It will thereby be seen that only a series of consecutive triggers each caused by a movement of the line in the same direction, corresponding in number to the given count set in the counter 148 by the sensitivity adjustment 106, will cause the LED 20 and the buzzer 108 to be energised. As a result, the effect of toing and froing of the line, by its being alternately drawn out and retracted in a see-saw effect caused by, for example, a rocking movement in the waters being fished, will be eliminated.

It will be appreciated that a single-tone intermittent audible output is issued from the buzzer 108, the frequency of the buzzes being dependent upon the speed of movement of the line. Its volume and pitch will be dependent upon the setting of the volume and pitch controls 38 and 40 respectively.

As regards the LED 20, this may be illuminated differently for a normal bite in which the fishing line is paid out, from its illumination with a drop-back bite.

Whilst the illustrated bite detector has been shown as a preferred embodiment of the present invention, it will be appreciated that the invention is not limited to this particular embodiment, and that very many variations and modifications will readily occur to a reader of ordinary skill in the art without taking the resulting detector outside the scope of the present invention. To give a few examples only, the reed switches 76 and 77 could be reversed, or the trigger pulse generator could be connected to the output from the reed switch 77 instead of that of the reed switch 76. The reed switches 76 and 77 could be arranged one beside the other on the printed circuit board, even so that they are generally co-linear, provided, with the illustrated arrangement of magnets, there is at least some component of the displacement of the respective centres of the reed switches in the directions of movement of the poles of the ring magnet 64 where they pass over those switches. Step 116 in Figure 4 could, instead of comprising the clearing of the counter, be a decrementing of the count in the counter. So far as Figure 5 is concerned, this would mean that the reset input will instead be a decrementing input for the counter 148. Alternatively, the count may be increased for each pulse generated whilst the line moves in a longitudinal direction, and reduced for each pulse generated whilst the line moves in the opposite longitudinal direction, or the count may simply remain unchanged by a pulse upon a change in line movement direction. In the illustrated detector, the given count required in the counter 148 to trigger an alarm signal may be set by the sensitivity control 106 to be any selected count from 2, 4, 8, 16, 32, 64 and 128, although the range of possible counts selectable can be different.

## Claims

1. A fish-bite detector having coupling means (26) which are coupled to a fishing line when the detector is in use, pulse generator means (64, 76, 77) coupled to the coupling means (26) to generate a pulse every time the coupling means (26) indicates that the line has moved longitudinally through a given distance, a counter (148) connected to the pulse generating means (64, 76, 77) to provide a count of the number of pulses it receives, and an alarm output of the counter (148) which provides an alarm signal when the count in the counter (148) reaches a given count, whereupon it is reset, **characterised in that** the detector is provided with direction indicating means (76, 77, 130) which serve to indicate the direction of longitudinal movement of the fishing line, and **in that** the detector is such that a change in the longitudinal direction of movement of the fishing line as indicated by the direction indicating means (76, 77, 130) causes the count in the counter (148) to be interrupted.

2. A fish-bite detector according to claim 1, **characterised in that** the fish-bite detector is such that the count in the counter (148) remains unaltered by a pulse it receives in the event of such a change.

3. A fish-bite detector according to claim 1, **characterised in that** the fish-bite detector is such that the count in the counter (148) is reduced by a pulse it receives in the event of such a change.

4. A fish-bite detector according to claim 1, **characterised in that** the fish-bite detector is such that the count in the counter (148) is reset in the event of such a change.

5. A fish-bite detector according to claim 1, **characterised in that** the fish-bite detector is such that the count in the counter (148) is reduced in the event of such a change.

6. A fish-bite detector according to claim 1, **characterised in that** the fish-bite detector is such that the count in the counter (148) is increased for each pulse generated whilst the line moves in a given longitudinal direction, and reduced for each pulse generated whilst the line moves in the opposite longitudinal direction.

7. A fish-bite detector according to any preceding claim, **characterised in that** the direction indicating means (76, 77, 130) comprise two devices (76, 77) triggered by movement of the coupling means (26) one immediately after the other.

8. A fish-bite detector according to claim 6, **characterised in that** the direction indicating means (76, 77, 130) comprise two reed switches (76, 77) displaced from one another sc that an adjacent rotary magnet (64) coupled to the coupling means (26) will, by its rotation, trigger one of the reed switches (76, 77) immediately before the other.

9. A fish-bite detector according to claim 7 or claim 8, **characterised in that** the detector is such that the direction of movement of the fishing line is determined by the condition of one of the devices (76 or 77) at the time the other is triggered.

10. A fish-bite detector according to any preceding claim, **characterised in that** sensitivity adjustment means (106) are connected to the counter (148) to alter the said given number, thereby to alter the sensitivity of the detector.

## Patentansprüche

1. Fischanbeiß-Detektor, der versehen ist mit Kopplungsmitteln (26), die mit einer Angelschnur gekoppelt sind, wenn der Detektor in Gebrauch ist, Impulsgeneratormitteln (64, 76, 77), die mit den Kopplungsmitteln (26) gekoppelt sind, um jedesmal einen Impuls zu erzeugen, wenn die Kopplungsmittel (26) angeben, dass sich die Schnur über eine gegebene Strecke in Längsrichtung bewegt hat, einem Zähler (148), der mit den Impulserzeugungsmitteln (64, 76, 77) verbunden ist, um eine Zählung die Anzahl der Impulse, die er empfängt, auszuführen, und einem Alarmausgang des Zählers (148), der ein Alarmsignal bereitstellt, wenn der Zählstand im Zähler (148) einen gegebenen Zählstand erreicht, woraufhin er zurückgesetzt wird, **dadurch gekennzeichnet, dass** der Detektor mit Richtungsangabemitteln (76, 77, 130) versehen ist, die dazu dienen, die Richtung der Längsbewegung der Angelschnur anzugeben, und dass der Detektor so beschaffen ist, dass eine Änderung der Bewegungslängsrichtung der Angelschnur, die durch die Richtungsangabemittel (76, 77, 130) angegeben wird, bewirkt, dass die Zählung im Zähler (148) unterbrochen wird.

2. Fischanbeiß-Detektor nach Anspruch 1, **dadurch gekennzeichnet, dass** der Fischanbeiß-Detektor so beschaffen ist, dass der Zählstand im Zähler (148) durch einen Impuls, den er im Fall einer solchen Änderung empfängt, unverändert bleibt.

3. Fischanbeiß-Detektor nach Anspruch 1, **dadurch gekennzeichnet, dass** der Fischanbeiß-Detektor so beschaffen ist, dass der Zählstand im Zähler (148) durch einen Impuls, den er bei einer solchen Änderung empfängt, verringert wird.

4. Fischanbeiß-Detektor nach Anspruch 1, **dadurch gekennzeichnet, dass** der Fischanbeiß-Detektor so beschaffen ist, dass der Zählstand im Zähler (148) im Fall einer solchen Änderung zurückgesetzt wird.

5. Fischanbeiß-Detektor nach Anspruch 1, **dadurch gekennzeichnet, dass** der Fischanbeiß-Detektor so beschaffen ist, dass der Zählstand im Zähler (148) bei einer solchen Änderung verringert wird.

6. Fischanbeiß-Detektor nach Anspruch 1, **dadurch gekennzeichnet, dass** der Fischanbeiß-Detektor so beschaffen ist, dass der Zählstand im Zähler (148) bei jedem Impuls, der erzeugt wird, wenn sich die Schnur in einer gegebenen Längsrichtung bewegt, erhöht wird und bei jedem Impuls, der erzeugt wird, wenn sich die Schnur in der entgegengesetzten Längsrichtung bewegt, verringert wird.

7. Fischanbeiß-Detektor nach einem vorhergehenden Anspruch, **dadurch gekennzeichnet, dass** die Richtungsangabemittel (76, 77, 130) zwei Vorrichtungen (76, 77) umfassen, die durch eine Bewegung der Kopplungsmittel (26) unmittelbar nacheinander ausgelöst werden.

8. Fischanbeiß-Detektor nach Anspruch 6, **dadurch gekennzeichnet, dass** die Richtungsangabemittel (76, 77, 130) zwei Reed-Schalter (76, 77) umfassen, die zueinander versetzt sind, so dass ein benachbarter Drehmagnet (64), der mit den Kopplungsmitteln (76) gekoppelt ist, durch seine Drehung einen der Reed-Schalter (76, 77) unmittelbar vor dem anderen auslöst.

9. Fischanbeiß-Detektor nach Anspruch 7 oder Anspruch 8, **dadurch gekennzeichnet, dass** der Detektor so beschaffen ist, dass die Bewegungsrichtung der Angelschnur durch den Zustand einer der Vorrichtungen (76 oder 77) zu dem Zeitpunkt, zu dem die andere ausgelöst wird, bestimmt wird.

10. Fischanbeiß-Detektor nach einem vorhergehenden Anspruch, **dadurch gekennzeichnet, dass** Empfindlichkeitseinstellmittel (106) mit dem Zähler (148) verbunden sind, um die gegebene Anzahl zu verändern, wodurch die Empfindlichkeit des Detektors geändert wird.

## Revendications

1. Un détecteur de touche de pêche, comprenant des moyens de couplage (26), couplés à une ligne de pêche lorsque le détecteur est en utilisation, des moyens générateurs d'impulsions (64, 76, 77), couplés aux moyens de couplage (26) pour générer une impulsion chaque fois que les moyens de couplage (26) indiquent que la ligne s'est déplacée longitudinalement d'une distance donnée, un compteur (148), connecté aux moyens générateurs d'impulsions (64, 76, 77), pour fournir un comptage du nombre d'impulsions qu'il reçoit, et une sortie d'alarme du compteur (148), qui fournit un signal d'alarme lorsque le comptage effectué dans le compteur (148) atteint une valeur de comptage donnée, à la suite de quoi il est remis à l'état initial, **caractérisé en ce que** le détecteur est muni de moyens d'indication de sens (76, 77, 130), servant à indiquer le sens du déplacement longitudinal de la ligne de pêche, et **en ce que** le détecteur est tel qu'un changement du sens longitudinal de déplacement de la ligne de pêche, tel qu'indiqué par les moyens d'indication de sens (76, 77, 130), provoque l'interruption du comptage effectué dans le compteur (148).

2. Un détecteur de touche de pêche selon la revendication 1, **caractérisé en ce que** le détecteur de touche de pêche est réalisé de manière que le comptage effectué dans le compteur (148) reste inchangé par la réception d'une impulsion dans l'éventualité d'un tel changement.

3. Un détecteur de touche de pêche selon la revendication 1, **caractérisé en ce que** le détecteur de touche de pêche est réalisé de manière que le comptage effectué dans le compteur (148) est réduit, de la valeur d'une impulsion reçue dans l'éventualité d'un tel changement.

4. Un détecteur de touche de pêche selon la revendication 1, **caractérisé en ce que** le détecteur de touche de pêche est tel que le comptage effectué dans le comptage effectué dans le compteur (148) est remis à l'état initial dans l'éventualité d'un tel changement.

5. Un détecteur de touche de pêche selon la revendication 1, **caractérisé en ce que** le détecteur de touche de pêche est tel que le comptage effectué dans le compteur (148) est réduit dans l'éventualité d'un tel changement.

6. Un détecteur de touche de pêche selon la revendication 1, **caractérisé en ce que** le détecteur de touche de pêche est tel que le comptage effectué dans le compteur (148) est augmenté pour chaque impulsion générée tandis que la ligne se déplace en un sens longitudinal donné, et est réduit pour chaque impulsion générée, tandis que la ligne se déplace dans le sens longitudinal opposé.

7. Un détecteur de touche de pêche selon l'une quelconque des revendications précédentes, **caractérisé en ce que** les moyens d'indication de sens (76, 77, 130) comprennent deux dispositifs (76, 77) déclenchés par le déplacement des moyens d'accouplement (26), l'un immédiatement après l'autre.

8. Un détecteur de touche de pêche selon la revendication 6, **caractérisé en ce que** les moyens d'indication de sens (76, 77, 130) comprennent deux interrupteurs à tige (76, 77) décalés l'un par rapport à l'autre, de manière qu'un aimant rotatif (64) adjacent, couplé aux moyens de couplage (26), de par sa rotation, déclenche l'un des interrupteurs à tige (76, 77) immédiatement avant l'autre.

9. Un détecteur de touche de pêche selon la revendication 7 ou la revendication 8, **caractérisé en ce que** le détecteur est tel que le sens de déplacement de la ligne de pêche est déterminé par l'état d'un des dispositifs (76 ou 77) au moment où l'autre est déclenché.

10. Un détecteur de touche de pêche selon l'une quelconque des revendications précédentes, caractérisé en ce des moyens d'ajustement de sensibilité (106) sont connectés au compteur (148) pour modifier ledit nombre donné, de manière à modifier la sensibilité du détecteur.
